# EUROPEAN PATENT APPLICATION

(11) **EP 3 073 599 A1**
(43) Date of publication of application: **28.09.2016**
(21) Application number: 15161110.0
(22) Date of filing: 26.03.2015
(51) Int. Cl.: H02J 3/38, G01R 19/165, H02S 50/10

(54) **Method for testing electric system and electric system**

(71) Applicant: ABB Technology AG, 8050 Zürich (CH)
(72) Inventor: Jussila, Matti T., 00380 Helsinki (FI); Riipinen, Tomi, 00380 Helsinki (FI); Laakkonen, Tommi, 00380 Helsinki (FI)
(74) Representative: Kolster Oy Ab

(57) **Abstract**

A method for testing an electric system and an electric system comprising an inverter (10); and control means (100, 101, 102) adapted to control the inverter (10) to provide an AC voltage of a predetermined magnitude and a predetermined frequency from an AC output of the inverter, to monitor, during the providing of the AC voltage of the predetermined magnitude and the predetermined frequency from the AC output of the inverter (10), a magnitude and a frequency of an AC voltage at a monitoring point (M0) connected to the AC output of the inverter, and to determine if the monitored magnitude and frequency of the AC voltage at the first monitoring point (M0) correspond to the predetermined magnitude and the predetermined frequency of the AC voltage provided by the inverter (10).

## Description

### FIELD OF THE INVENTION

The invention relates to a method for testing an electric system, and to an electric system.

### BACKGROUND OF THE INVENTION

Electric systems may need to be tested during a commissioning thereof, for example. Such electric systems may include converter systems comprising inverters which convert DC (direct current) power from a DC power source to AC (alternating current) power. Herein 'inverter' generally refers to an electronic device or circuitry that is able to convert direct current to alternating current. An example of the inverter is a semiconductor bridge implemented by means of controllable semiconductor switches, such as IGBTs (Insulated-gate Bipolar Transistor) or FETs (Field-Effect Transistor), which are controlled according to a modulation or control scheme used.

One example of an electric system comprising one or more inverters is a photovoltaic system, such as a photovoltaic power plant, in which photovoltaic panels supply DC power to inverters which convert the DC power to AC power, which may further be supplied to various AC loads via an AC network, for example. Large photovoltaic power plants may comprise a plurality of parallel inverters each receiving DC power from an array of photovoltaic panels.

Such electric systems comprising at least one inverter which are to be connected to an external AC network (grid) may comprise a grid monitoring functionality which may be used to monitor the status and parameters of the AC network, such as an amplitude and frequency of the voltage of the AC network. This kind of grid monitoring functionality may be implemented inverter-specifically such that each of the inverters of the electric system monitor the AC network they are connected to. The grid monitoring functionality may be used for protecting the electric system and personnel in case of irregularities in the AC network, for example. Based on the grid monitoring functionality, the electric system, or certain components thereof such as individual inverters, may be disconnected from the external AC network upon detecting irregular AC network conditions, for example. The requirements for the grid monitoring functionality and the various procedures involved may be country-specific.

In the commissioning of such electric systems, such as a photovoltaic power plant, the possible grid monitoring functionality may need to be tested before the system is allowed to be connected to an external AC network, such as a public electrical grid. Such testing may be arranged by injecting test signals to the grid monitoring measurement path. However, a problem related to a solution of this kind is that separate testing equipment is needed for producing the test signals.

### BRIEF DESCRIPTION OF THE INVENTION

The object of the invention is thus to provide a method and an apparatus for implementing the method so as to solve or at least alleviate the above problem or at least to provide an alternative solution. The object of the invention is achieved with a method, a computer program product, and a system that are characterized by what is stated in the independent claims. Preferred embodiments of the invention are described in the dependent claims.

The invention is based on the idea of generating an AC network having predetermined parameters with one of the inverters included in the electric system to be commissioned, such that the grid monitoring functionality of one or more inverters of the electric system can be tested by monitoring parameters of the generated AC network and verifying that the monitoring results correspond to the predetermined parameters.

An advantage of the solution of the invention is that the grid monitoring functionality of the electric system, or an inverter thereof, to be commissioned can be tested without separate testing equipment thus making the testing easier.

### BRIEF DESCRIPTION OF THE FIGURES

In the following, the invention will be described in more detail in connection with preferred embodiments and with reference to the accompanying drawings, in which
Figure 1 illustrates an example of an electric system according to an embodiment;
Figure 2 illustrates an example of an electric system according to an embodiment;
Figure 3 illustrates an example of an electric system according to an embodiment;
Figure 4 illustrates an example of an electric system according to an embodiment; and
Figure 5 illustrates an example of an electric system according to an embodiment.

### DETAILED DESCRIPTION OF THE INVENTION

The application of the invention is not limited to any specific system, but it can be used in connection with various electric systems. Moreover, the use of the invention is not limited to systems employing any specific fundamental frequency or any specific voltage level, for example.

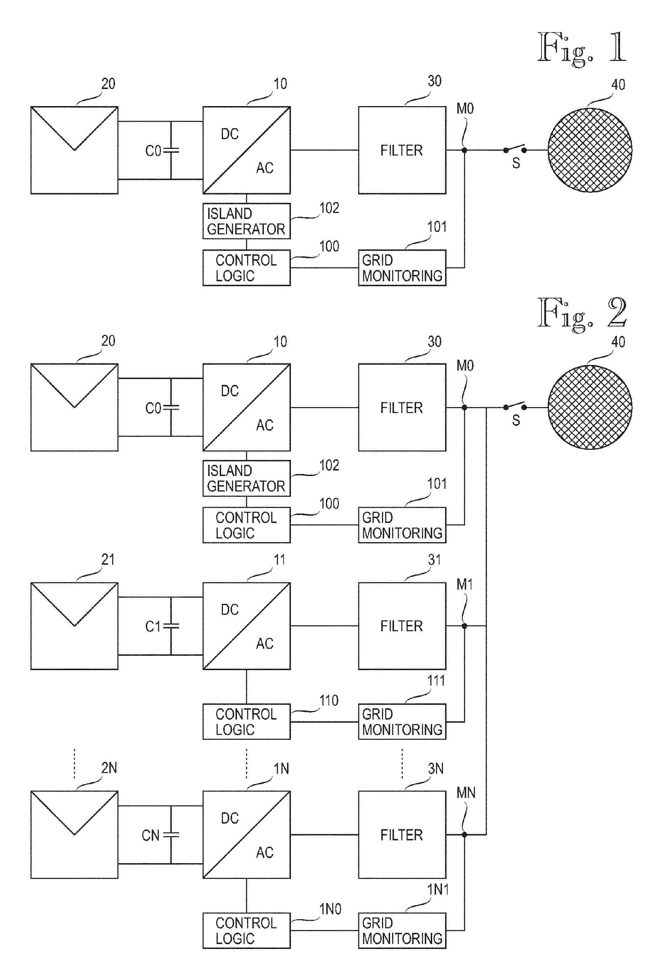

Figure 1 illustrates a simplified example of an electric system according to an embodiment. The figure shows only components necessary for understanding the invention. The exemplary system of Figure 1 comprises an inverter 10. A DC input of the inverter 10 may be connected to a DC power source 20. An example of a DC power source 20 is a photovoltaic panel or an array of two or more photovoltaic panels. Other types of DC power sources can also be utilized. There may be one or more switches (not shown) between the inverter 10 and the DC power source 20 enabling the connection and disconnection of the inverter to/from the DC power source. The exemplary system of Figure 1 further shows a capacitance C0 connected between the poles of the DC input of the inverter 10. Further, an AC output of the inverter 10 may be connected to an external AC network 40, such as a public electrical grid, in order to supply power from the DC power source 20 to the external AC network 40, when the electric system is in normal use. There may be one or more switches S between the electric system and the external AC network 40 enabling the connection and disconnection of the electric system to/from the external AC network 40. The AC connection between the inverter 10 and the external AC network 40 may be a one-phase AC connection or a three-phase AC connection, for example. The exemplary system of Figure 1 further shows an AC output filter 30 connected to the AC output of the inverter 10. The AC output filter 30 may be an LCL-filter, for example. There could also be one or more transformers or converters (not shown in the figure) connected between the AC output of the inverter 10 and the external AC network 40, for example.

The exemplary system of Figure 1 further comprises a control arrangement for the inverter 10, which control arrangement comprises a control logic unit 100, a grid monitoring unit 101 and an island generator unit 102. While these units have been illustrated as separate units, they could be implemented as a single unit. Moreover, the units 100, 101, 102 included in the control arrangement for the inverter 10 could be physically included within the inverter 10 even though in the figure they have been illustrated separately from the inverter 10. The control arrangement may control the operation of the inverter 10. Moreover, the functionality according to the various embodiments described herein may be implemented at least partly by means of the control arrangement for the inverter 10.

According to an embodiment, a testing of an electric system comprising a first inverter 10 may be performed as follows:
a) First by providing with the first inverter 10 an AC voltage of a predetermined magnitude and a predetermined frequency from an AC output of the first inverter. In other words, in the exemplary system of Figure 1, the first inverter 10 may be used to generate an AC voltage of a predetermined magnitude and a predetermined frequency from the AC output of the first inverter, thus effectively creating an AC network or grid on the network connected to the AC output of the first inverter. Preferably switch S is kept open such that there is no connection to an external network 40 and thus a local AC network is established. This step may be performed with the control arrangement for the first inverter 10, in particular with the island generator unit 102, for example, such that the inverter 10 is controlled to provide the predetermined magnitude and the predetermined frequency from its AC output.
b) Then, during step a), by monitoring a magnitude and a frequency of an AC voltage at a first monitoring point M0 connected to the AC output of the first inverter. This step may be performed with the control arrangement for the first inverter 10, in particular with the monitoring unit 101, for example, or generally with the first inverter 10. The first monitoring point M0 may be any point connected to the AC output of the first inverter 10. According to an embodiment, the first monitoring point M0 may be connected to the AC output of the first inverter 10 directly or via at least one filter 30 as shown in the example of Figure 1. There may also be other components or devices, such as a transformer or a converter, between the first monitoring point M0 and the AC output of the first inverter 10.
c) And then, by determining if the monitored magnitude and frequency of the AC voltage at the first monitoring point correspond to the predetermined magnitude and the predetermined frequency of the AC voltage provided by the first inverter. This step may be performed with the control arrangement for the first inverter 10, in particular with the control logic unit 100, for example, or generally with the first inverter 10.

According to an embodiment, step c) comprises comparing the monitored magnitude and frequency of the AC voltage at the first monitoring point M0 with the predetermined magnitude and the predetermined frequency of the AC voltage, respectively, and determining that the monitored magnitude and frequency of the AC voltage at the first monitoring point M0 correspond to the predetermined magnitude and the predetermined frequency of the AC voltage if the monitored magnitude and frequency of the AC voltage at the first monitoring point do not deviate from the predetermined magnitude and the predetermined frequency of the AC voltage respectively by more than predetermined amounts. The predetermined amounts may be system- or case-specific and represent maximum tolerable measuring errors of the monitoring path of the first inverter 10, for example. That way it can be tested if the measuring accuracy of the monitoring path of the first inverter 10 is within required limits, for example.

According to an embodiment, steps a) to c) may be performed at least two times such that the predetermined magnitude and/or the predetermined frequency of the AC voltage provided by the first inverter 10 is varied each time. Thus, the predetermined magnitude and/or the predetermined frequency of the AC voltage provided by the first inverter 10 in step a) may be varied one or more times and each time also perform steps b) and c) to verify whether the monitored magnitude and frequency of the AC voltage at the first monitoring point correspond to the predetermined magnitude and the predetermined frequency of the AC voltage provided by the first inverter or not. Thus, the measuring accuracy of the monitoring path of the first inverter 10 can be tested for different values of the magnitude and the frequency of the AC voltage. It is possible to arrange different kind of test procedures for different situations such that the predetermined magnitude and/or the predetermined frequency of the AC voltage provided by the first inverter 10 is varied for a plurality of times according to a predetermined test procedure. Such test procedure could be country-specific, for example, such that test procedure is drafted to take into account country-specific requirements for the system in order to test system protection functions and/or other functions, for example, that involve the monitoring path of the first inverter 10. The predetermined magnitude(s) and the frequency(-ies) of the AC voltage used for the testing procedure depend on the system but they may correspond to the nominal values of an external AC network 40 that the electric system is to be connected to after commissioning. When different values of the magnitude and the frequency of the AC voltage are used for the testing, the further values may then comprise values that deviate from the nominal values to the positive and/or negative direction. Such further values could correspond to different protection levels of the first inverter 10, for example. It is alternatively or in addition possible to draft different kind of test procedures which may test the ability of the monitoring path of the first inverter 10 to detect rate of change of frequency, for example, in which case the predetermined frequency of the AC voltage provided by the first inverter 10 is varied in a suitable manner. However, the implementation of the various embodiments is not limited to any specific test procedure.

Figure 2 illustrates a simplified example of an electric system according to an embodiment. The exemplary system of Figure 2 corresponds to that of Figure 1 but, in addition to the first inverter 10, further comprises a number of second inverters 11 to 1 N. The number of such second inverters 11 to 1 N could be one or more. A DC input of each of the second inverters 11 to 1 N may be connected to a DC power source 21 to 2N, respectively. The exemplary system of Figure 2 further shows a capacitance C1 to CN connected between the poles of the DC input of each of the second inverter 10. Further, an AC output of each of the second inverters 11 to 1 N may be connected to the external AC network 40, when the electric system is in normal use. The exemplary system of Figure 2 further shows an AC output filter 31 to 3N, such as an LCL filter, connected to the AC output of each of the second inverters 11 to 1 N, respectively. There could, in addition to the AC output filters 30, 31 to 3N or instead of the AC output filters 30, 31 to 3N, be one or more transformers or converters (not shown in the figure) connected between the AC outputs of the inverters 10, 11 to 1 N and the external AC network 40, for example. Such one or more transformers or converters could comprise one common transformer or converter for all the inverters 10, 11 to 1 N or inverter-specific transformers or converters connected between the AC output of each of the inverters 10, 11 to 1 N and the external AC network 40. The exemplary system of Figure 2 further comprises a control arrangement for each of the second inverters 11 to 1N comprising a control logic unit 110 to 1N0 and a grid monitoring unit 111 to 1N1, respectively. While these units have been illustrated as separate units, they could be implemented as a single unit. Moreover, the units included in the control arrangements for the second inverters 11 to 1N could be physically included within the second inverters even though in the figure they have been illustrated separately from the inverters. The control arrangements may control the operation of the second inverters, respectively. Moreover, the functionality according to the various embodiments described herein may be implemented at least partly by means of the control arrangements for the second inverters.

According to an embodiment, when the electric system comprises at least one second inverter 11 to 1 N, the testing of the electric system may be further performed as follows:
d) By monitoring, during step a), a magnitude and a frequency of an AC voltage at a second monitoring point M1 to MN connected to the AC output of the first inverter 10. This step may be performed with the control arrangement for the at least one second inverter 11 to 1 N, in particular with the respective monitoring unit 111 to 1N1, for example, or generally with the at least one second inverter. The second monitoring point M1 to MN may be any point connected to the AC output of the first inverter 10. According to an embodiment, the second monitoring point M1 to MN may be connected to the AC output of the first inverter 10 directly or via at least one filter 30 as shown in the example of Figure 2. There may also be other components or devices, such as one or more transformers or converters, between the second monitoring point M1 to MN and the AC output of the first inverter 10.
e) And then determining if the monitored magnitude and frequency of the AC voltage at the second monitoring point M1 to MN correspond to the predetermined magnitude and the predetermined frequency of the AC voltage provided by the first inverter 10. This step may be performed with the control arrangement for the at least one second inverter 11 to 1 N, in particular with the respective control logic unit 110 to 1N0, for example, or generally with the at least one second inverter. In order for the control arrangement for the at least one second inverter 11 to 1 N to be able to perform step e), the control arrangement for the at least one second inverter 11 to 1 N should know the predetermined magnitude and the predetermined frequency of the AC voltage provided by the first inverter 10. This may be arranged in such a way that the test procedure is arranged in a time-synchronized manner in all the inverters such that the at least one second inverter always knows the current magnitude and the frequency of the AC voltage provided by the first inverter 10 based on timing information, for example. Another possibility is to communicate the current magnitude and the frequency of the AC voltage provided by the first inverter 10 from the control arrangement for the first inverter to the control arrangement for the at least one second inverter 11 to 1 N. For this purpose there may be a communication link (not shown in the figures) between the first and second inverters, or their control arrangements.

Thus, the at least one second inverter 11 to 1 N can be tested by using the first inverter 10 to generate an AC voltage of the predetermined magnitude and the predetermined frequency from the AC output of the first inverter, by monitoring this generated AC voltage with the control arrangement for the at least second inverter and then by verifying the result of the monitoring.

According to an embodiment, step e) comprises comparing the monitored magnitude and frequency of the AC voltage at the second monitoring point M1 to MN with the predetermined magnitude and the predetermined frequency of the AC voltage respectively, and determining that the monitored magnitude and frequency of the AC voltage at the second monitoring point correspond to the predetermined magnitude and the predetermined frequency of the AC voltage if the monitored magnitude and frequency of the AC voltage at the second monitoring point do not deviate from the predetermined magnitude and the predetermined frequency of the AC voltage respectively by more than predetermined amounts. The predetermined amounts may be system- or case-specific and represent maximum tolerable measuring errors of the monitoring path of the at least one second inverter 11 to 1 N, for example. That way it can be tested if the measuring accuracy of the monitoring path of the at least one second inverter is within required limits, for example.

According to an embodiment, steps a), d) and e) may be performed at least two times such that the predetermined magnitude and/or the predetermined frequency of the AC voltage provided by the first inverter 10 is varied each time. This may be performed in a similar manner as was described above in connection with the testing of the first inverter 10. Accordingly, the predetermined magnitude and/or the predetermined frequency of the AC voltage provided by the first inverter 10 in step a) may be varied one or more times and each time also perform steps d) and e) to verify whether the monitored magnitude and frequency of the AC voltage at the second monitoring point correspond to the predetermined magnitude and the predetermined frequency of the AC voltage provided by the first inverter or not. Thus, the measuring accuracy of the monitoring path of the at least one second inverter 11 to 1 N can be tested for different values of the magnitude and the frequency of the AC voltage in the same way as the monitoring path of the first inverter 10.

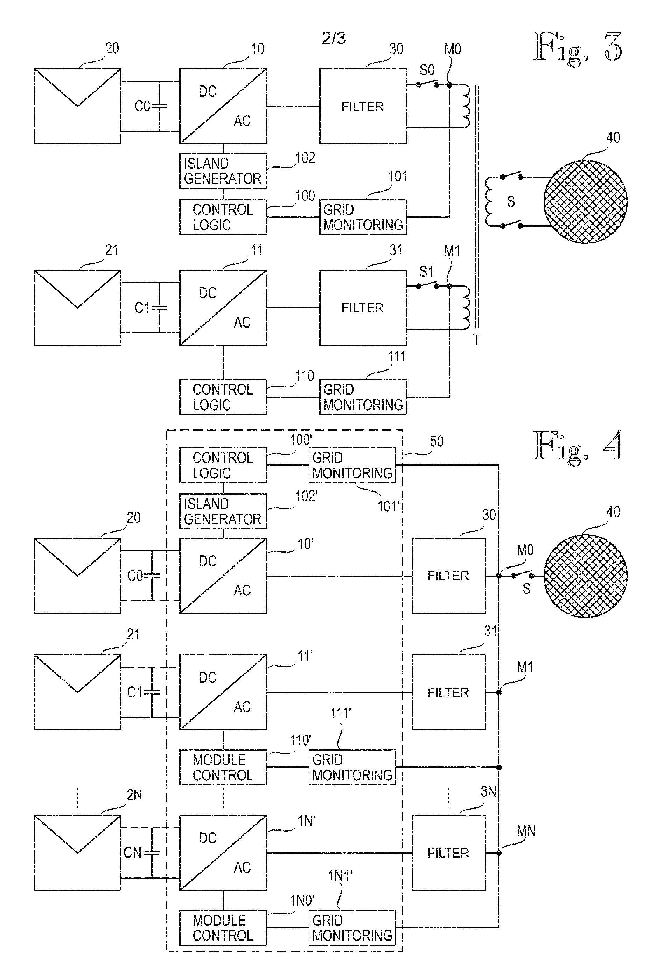

Figure 3 illustrates a simplified example of an electric system according to an embodiment. The exemplary system of Figure 3 essentially corresponds to that of Figure 2 but further comprises a transformer, in this case a multi-winding transformer, T connected between the inverters 10, 11 and the external AC network 40. In this example the switch S between the inverters 10, 11 and the external AC network 40 is configured to connect or disconnect the secondary winding of the transformer T and the system may further comprise switches S0, S1 configured to connect or disconnect the current paths through the primary windings of the transformer T as shown in the figure. In this example the second monitoring point M1 may be connected to the AC output of the first inverter 10 via the output filter 30 of the first inverter 10 and via the transformer T as shown in the example of Figure 3. A testing of the electric system of Figure 3 may be carried out in a similar manner as described in the embodiments in connection with Figure 2, for example.

Figure 4 illustrates a simplified example of an electric system according to an embodiment. The exemplary system of Figure 3 essentially corresponds to that of Figure 2 but, instead of separate inverter units 10, 11 to 1 N, the embodiment of Figure 4 comprises inverter power modules 10', 11' to 1 N' within a multi-module inverter device 50. It is noted that the term "inverter" is thus intended to refer not only to such separate inverter units 10, 11 to 1 N, as exemplified in the embodiments of Figures 1 to 3, but also to inverter power modules 10', 11' to 1 N' possibly comprised within a common device housing, for example. The exemplary system of Figure 4 further comprises a control arrangement for the first inverter power module type of inverter 10' comprising a control logic unit 100', a grid monitoring unit 101' and an island generator unit 102', and essentially corresponding to the control arrangement of the first inverter 10 of Figure 2 and a control arrangement for each of the second inverter power module type of inverters 11' to 1N' comprising a control logic unit 110' to 1N0' and a grid monitoring unit 111' to 1N1', respectively, and essentially corresponding to the control arrangements of the second inverters 11 to 1 N of Figure 2. A testing of the electric system of Figure 4 may be carried out in a similar manner as described in the embodiments in connection with Figure 2, for example.

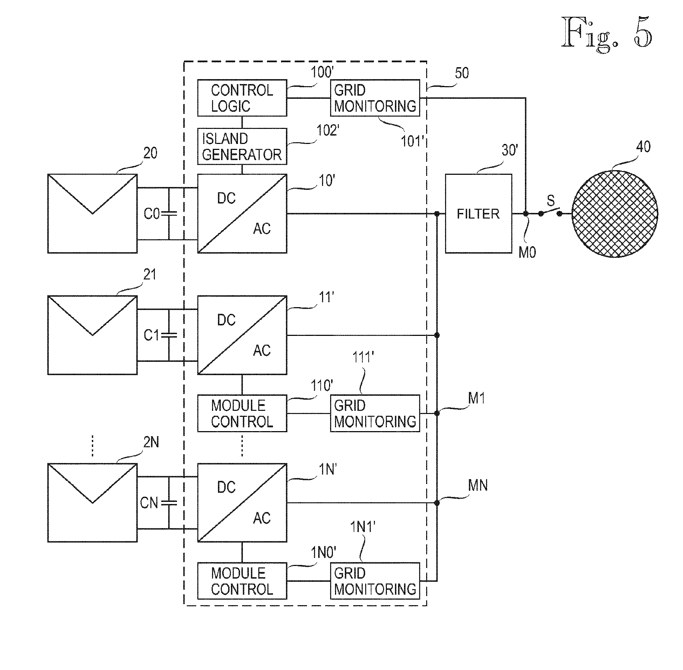

Figure 5 illustrates a simplified example of an electric system according to an embodiment. The exemplary system of Figure 5 essentially corresponds to that of Figure 4 but, instead of separate AC output filters for the inverters 10' to 1 N', as in the example of Figure 4, comprises a common AC output filter 30', such as an LCL filter, for all the inverters 10' to 1 N' comprised in the multi-module inverter device 50. In the example of Figure 5, the second second monitoring points M1 to MN may be directly connected to the AC output of the first inverter 10' as illustrated. A testing of the electric system of Figure 4 may also be carried out in a similar manner as described in the embodiments in connection with Figure 2, for example.

A control arrangement for an inverter according to any one of the embodiments herein, or a combination thereof, may be implemented as one physical unit or as two or more separate physical units that are configured to implement the functionality of the various embodiments. Herein the term 'unit' generally refers to a physical or logical entity, such as a physical device or a part thereof or a software routine. The control arrangement according to any one of the embodiments may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations, and a central processing unit (CPU), such as a general-purpose digital signal processor. The CPU may comprise a set of registers, an arithmetic logic unit, and a control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system which may provide system services to a computer program written with the program instructions. The computer or other apparatus implementing the invention, or a part thereof, may further comprise suitable input means for receiving e.g. measurement and/or control data, and output means for outputting e.g. control or other data. It is also possible to use a specific integrated circuit or circuits, or discrete electric components and devices for implementing the functionality according to any one of the embodiments.

The invention may be implemented in existing electric system components such as inverters. Present inverters may comprise processors and memory that may be utilized in the functions according to the various embodiments described herein. Thus, all modifications and configurations required for implementing an embodiment in existing electric system components, such as inverters may be performed as software routines, which may be implemented as added or updated software routines. If at least part of the functionality of the invention is implemented by software, such software may be provided as a computer program product comprising computer program code which, when run on a computer, causes the computer or corresponding arrangement to perform the functionality according to the embodiments as described herein. Such a computer program code may be stored or generally embodied on a computer readable medium, such as suitable memory, e.g. a flash memory or an optical memory, from which it is loadable to the unit or units executing the program code. In addition, such a computer program code implementing the invention may be loaded to the unit or units executing the computer program code via a suitable data network, for example, and it may replace or update a possibly existing program code.

It is obvious to a person skilled in the art that as technology advances, the basic idea of the invention can be implemented in a variety of ways. Consequently, the invention and its embodiments are not restricted to the above examples, but can vary within the scope of the claims.

## Claims

1. A method for testing an electric system comprising a first inverter (10; 10'), the method comprising:
a) providing with the first inverter (10; 10') an AC voltage of a predetermined magnitude and a predetermined frequency from an AC output of the first inverter;
b) monitoring, during step a), with the first inverter (10; 10') a magnitude and a frequency of an AC voltage at a first monitoring point (M0) connected to the AC output of the first inverter; and
c) determining with the first inverter (10; 10') if the monitored magnitude and frequency of the AC voltage at the first monitoring point (M0) correspond to the predetermined magnitude and the predetermined frequency of the AC voltage provided by the first inverter.

2. A method as claimed in claim 1, wherein step c) comprises:
comparing the monitored magnitude and frequency of the AC voltage at the first monitoring point (M0) with the predetermined magnitude and the predetermined frequency of the AC voltage respectively; and
determining that the monitored magnitude and frequency of the AC voltage at the first monitoring point (M0) correspond to the predetermined magnitude and the predetermined frequency of the AC voltage if the monitored magnitude and frequency of the AC voltage at the first monitoring point do not deviate from the predetermined magnitude and the predetermined frequency of the AC voltage respectively by more than predetermined amounts.

3. A method as claimed in claim 1 or 2, wherein steps a) to c) are performed at least two times such that the predetermined magnitude and/or the predetermined frequency of the AC voltage provided by the first inverter (10; 10') is varied each time.

4. A method as claimed in claim 1, 2 or 3, wherein the first monitoring point (M0) is connected to the AC output of the first inverter (10; 10') directly or via at least one filter.

5. A method as claimed in any one of claims 1 to 4, wherein the electric system comprises at least one second inverter (11, 1 N; 11', 1 N'), the method comprising:
d) monitoring, during step a), with the at least one second inverter (11, 1 N; 11', 1 N') a magnitude and a frequency of an AC voltage at a second monitoring point (M1, MN) connected to the AC output of the first inverter (10; 10'); and
e) determining with the second inverter (11, 1N; 11', 1N') if the monitored magnitude and frequency of the AC voltage at the second monitoring point (M1, MN) correspond to the predetermined magnitude and the predetermined frequency of the AC voltage provided by the first inverter (10; 10').

6. A method as claimed in claim 5, wherein step e) comprises:
comparing the monitored magnitude and frequency of the AC voltage at the second monitoring point (M1, MN) with the predetermined magnitude and the predetermined frequency of the AC voltage respectively; and
determining that the monitored magnitude and frequency of the AC voltage at the second monitoring point (M1, MN) correspond to the predetermined magnitude and the predetermined frequency of the AC voltage if the monitored magnitude and frequency of the AC voltage at the second monitoring point do not deviate from the predetermined magnitude and the predetermined frequency of the AC voltage respectively by more than predetermined amounts.

7. A method as claimed in claim 5 or 6, wherein steps a), d) and e) are performed at least two times such that the predetermined magnitude and/or the predetermined frequency of the AC voltage provided by the first inverter (10; 10') is varied each time.

8. A method as claimed in any one of claims 1 to 7, wherein the second monitoring point (M1, MN) is connected to the AC output of the first inverter (10; 10') directly or via at least one filter.

9. A computer program product comprising computer program code, wherein execution of the program code in a computer causes the computer to carry out the steps of the method according to any one of claims 1 to 8.

10. An electric system comprising:
a first inverter (10; 10'); and
control means for the first inverter comprising:
means (102; 102') adapted to control the first inverter (10; 10') to provide an AC voltage of a predetermined magnitude and a predetermined frequency from an AC output of the first inverter;
means (101; 101') adapted to monitor, during the providing of the AC voltage of the predetermined magnitude and the predetermined frequency from the AC output of the first inverter (10; 10'), a magnitude and a frequency of an AC voltage at a first monitoring point (M0) connected to the AC output of the first inverter; and
means (100; 100') adapted to determine if the monitored magnitude and frequency of the AC voltage at the first monitoring point (M0) correspond to the predetermined magnitude and the predetermined frequency of the AC voltage provided by the first inverter (10; 10').

11. An electric system as claimed in claim 10, wherein the means (100; 100') adapted to determine of the control means for the first inverter (10; 10') are adapted to:
compare the monitored magnitude and frequency of the AC voltage at the first monitoring point (M0) with the predetermined magnitude and the predetermined frequency of the AC voltage respectively; and
determine that the monitored magnitude and frequency of the AC voltage at the first monitoring point (M0) correspond to the predetermined magnitude and the predetermined frequency of the AC voltage if the monitored magnitude and frequency of the AC voltage at the first monitoring point do not deviate from the predetermined magnitude and the predetermined frequency of the AC voltage respectively by more than predetermined amounts.

12. An electric system as claimed in claim 10 or 11, wherein the control means for the first inverter (10; 10') comprise means (102; 102') adapted to vary the predetermined magnitude and/or the predetermined frequency of the AC voltage provided by the first inverter at least once.

13. An electric system as claimed in claim 10, 11 or 12, wherein the first monitoring point (M0) is connected to the AC output of the first inverter (10; 10') directly or via at least one filter.

14. An electric system as claimed in any one of claims 10 to 13, comprising:
at least one second inverter (11, 1 N; 11', 1 N'); and
control means for the at least one second inverter (11, 1 N; 11', 1 N') comprising:
means (111, 1N1; 111', 1N1') adapted to monitor, during the providing of the AC voltage of the predetermined magnitude and the predetermined frequency from the AC output of the first inverter (10; 10'), a magnitude and a frequency of an AC voltage at a second monitoring point (M1, MN) connected to the AC output of the first inverter; and
means (110, 1N0; 110', 1 NO') adapted to determine if the monitored magnitude and frequency of the AC voltage at the second monitoring point (M1, MN) correspond to the predetermined magnitude and the predetermined frequency of the AC voltage provided by the first inverter (10; 10').

15. An electric system as claimed in claim 14, wherein, the means (110, 1N0; 110', 1N0') adapted to determine of the control means for the at least one second inverter (11, 1 N; 11', 1 N') are adapted to:
compare the monitored magnitude and frequency of the AC voltage at the second monitoring point (M1, MN) with the predetermined magnitude and the predetermined frequency of the AC voltage respectively; and
determine that the monitored magnitude and frequency of the AC voltage at the second monitoring point (M1, MN) correspond to the predetermined magnitude and the predetermined frequency of the AC voltage if the monitored magnitude and frequency of the AC voltage at the second monitoring point do not deviate from the predetermined magnitude and the predetermined frequency of the AC voltage respectively by more than predetermined amounts.

16. An electric system as claimed in any one of claims 10 to 15, wherein the second monitoring point (M1, MN) is connected to the AC output of the first inverter (10; 10') directly or via at least one filter.
